# EUROPÄISCHE PATENTSCHRIFT

(11) **EP 4 145 972 B1**
(45) Veröffentlichungstag und Bekanntmachung des Hinweises auf die Patenterteilung: **20.05.2026**
(21) Anmeldenummer: 21727995.9
(22) Anmeldetag: 05.05.2021
(51) Int. Cl.: A01B 39/18, A01M 21/02

(54) **VORRICHTUNG UND VERFAHREN ZUR SELEKTIVEN, MECHANISCHEN BEIKRAUTREGULIERUNG MIT RÜCKSTELLBARER AUSWEICHBEWEGUNG VON WERKZEUGAKTOREINHEITEN**
DEVICE AND METHOD FOR SELECTIVELY, MECHANICALLY CONTROLLING WEEDS BY MEANS OF A RESTORABLE EVASIVE MOVEMENT OF TOOL ACTUATOR UNITS
DISPOSITIF ET PROCÉDÉ DE LUTTE SÉLECTIVE ET MÉCANIQUE CONTRE LES MAUVAISES HERBES AU MOYEN D'UN MOUVEMENT D'ÉVITEMENT RÉVERSIBLE D'UNITÉS ACTIONNEURS D'OUTIL

(30) Priorität: 06.05.2020 DE 102020002718
(43) Veröffentlichungstag der Anmeldung: 15.03.2023
(73) Patentinhaber: Grimme Landmaschinenfabrik SE & Co. KG, 49104 Damme (DE)
(72) Erfinder: STROTHMANN, Wolfram, 49078 Osnabrück (DE)
(74) Vertreter: Wischmeyer, André
(86) Internationale Anmeldenummer: PCT/EP2021/000061
(87) Internationale Veröffentlichungsnummer: WO 2021/223903

(56) Entgegenhaltungen:
- WO-A1-2016/191825
- DE-A1- 102018 211 814
- US-A1- 2018 139 947

## Beschreibung

Die vorliegende Erfindung bezieht sich auf eine Vorrichtung und Verfahren zur selektiven, mechanischen Beikrautregulierung in Gärten oder landwirtschaftlichen Feldern, wobei die einzeln ansteuerbaren Werkzeugaktoreinheiten durch eine rückstellbare Ausweichbewegung vor Beschädigung durch zufällig Im Arbeitsbereich befindliche feste Hindernisse geschützt sind.

### Stand der Technik

Mechanische Beikrautregulierung ist ein gefragtes Verfahren zur Regulierung des Beikrautbesatzes in landwirtschaftlichen Flächen, sowohl im ökologischen wie auch im konventionellen Landbau. Zum Einen werden zunehmend chemische Herbizide vom Markt genommen, da Zulassungen entfallen oder nicht erteilt werden. Dies ist in der Gefahr von unbekannter Folgewirkungen der Freisetzung der Chemikalien, insbesondere Langzeitwirkungen auf Umwelt und menschliche Gesundheit, begründet. Zum Anderen werden mit längerem Einsatz der chemischen Mittel in zunehmendem Maße Resistenzen bestimmter Beikräuter beobachtet. Hieraus entstehen Wirkungslücken die im konventionellen Landbau nur durch nicht-chemische Maßnahmen geschlossen werden können. Im ökologischen Landbau ist eine chemische Unkrautbekämpfung grundsätzlich nicht erlaubt, sodass mechanische Beikrautregulierung hier das meistverwendete Verfahren ist.

Innerhalb der mechanischen Beikrautregulierung muss zwischen flächiger und selektiver Regulierung unterschieden werden. Während die flächige Beikrautregulierung ohne elektronische Ansteuerung der Beikrautregulierungswerkzeuge erfolgt, werden die Werkzeuge bei selektiver Beikrautregulierung gezielt zumindest an den Stellen aktiviert, wo sich ein Beikraut befindet, und gezielt zumindest an den Stellen deaktiviert, wo sich eine Nutzpflanze befindet. Folglich ist eine flächige Beikrautregulierung nur in den Bereichen des Feldes zwischen den Nutzpflanzenreihen möglich, während eine selektive Beikrautregulierung auch im Bereich der Nutzpflanzenreihen möglich ist.

Während sich für die flächige, mechanische Beikrautregulierung zwischen den Pflanzreihen, insbesondere in Kombination mit kameragestützter Reihenführung der Maschine, in den letzten Jahren ein breiter Markt mit vielen Anbietern entwickelt hat, ist die selektive Beikrautregulierung immer noch vor Allem ein Forschungsthema. Trotz großer Nachfrage beschränkt sich das Angebot hier im Wesentlichen auf wenige Anbieter, die den Bereich zwischen den Pflanzen innerhalb der Reihe bei Kulturen mit langen Pflanzabständen innerhalb der Reihe wiederum flächig durch ein bis zwei Aktoren bearbeiten. Zu nennen sind hier beispielsweise der Robovator der Fa. Kress [NP1] oder der RoboCrop der Fa. Garford [NP2].

Beikrautregulierungssysteme mit durch Manipulatoren bewegten Werkzeugen oder mehreren Aktoren pro Reihe, die-eine höhere Auflösung der Beikrautregulierung im Feld und damit eine höhere Selektivität erreichen, bleiben ein Forschungsthema, weiches eine breite Abhandlung in Patent- und Nichtpatentliteratur erfährt [NP3]. Regelmäßig werden Fräsen oder Greifer als mögliche Aktoren für die Beikrautregulierung genannt, beispielsweise durch DE102018120756 (A1) und DE102011114901 (A1). Langsenkamp et al. [NP4] haben die Wirksamkeit mechanischer Stempel für die Beikrautregulierung nachgewiesen. Auch DE102013222776 (A1) und US2018139947 (A1) verwenden stempelartige Werkzeuge, wobei der Stempel durch einen Manipulator an die Zielposition verbracht wird. Bei DE102016224733 (A1) wird des Weiteren das Beikraut durch ein Fluid, welches unter Druck durch den Stempel im ausgefahrenen Zustand abgegeben wird, zusätzlich geschädigt. DE102016217816 (A1) befasst sich mit der Reinhaltung der Stempelaktorik im Feldeinsatz. Strothmann et al. [NP5] schlagen ein System vor, bei welchem Stempel in einer Reihe hinter einem bildgebenden Sensor angeordnet sind und während der Überfahrt über eine oder mehrere Pflanzreihen gezielt einzeln ausgelöst werden, wenn ein Beikraut erkannt wird. Ein solcher Aufbau hat zum Einen den Vorteil einer deutlich höheren Auflösung der Selektivität der Beikrautregulierung im Feld im Vergleich zu Systemen die flächig zwischen den Pflanzen in der Reihe arbeiten, wie beispielsweise die obenerwähnten Robovator der Fa. Kress [NP 1] oder RoboCrop der Fa. Garford [NP2}. Zum Anderen erfordert ein solcher Aufbau keinen Manipulator oder keine Verfahrachsen zum Verschieben der Aktoren an die Einsatzposition im Feld.

Die skizzierten Forschungsansätze konnten bislang noch keinen Einzug in die praktische Anwendung finden, da eine Reihe von Praxisanforderungen insbesondere im Bereich Standfestigkeit und Flächenleistung noch nicht in zufriedenstellendem Maße gelöst werden konnten.

Aus der WO 2016/191825 A1 ist ein Trägerfahrzeug bekannt, welches eine Vorrichtung zur Beikrautregulierung trägt. Dieses Trägerfahrzeug verfährt entlang einer vorgegebenen GPS-Karte.

### Aufgabe

Aufgabe der vorliegenden Erfindung ist die Gewährleistung eines zuverlässigen Betriebes der Beikrautregulierungsvorrichtung, wobei diese insbesondere durch undefiniert auf den Einsatzflächen befindliche feste Hindernisse, beispielsweise Steine, keinen Schaden nehmen darf.

### Lösung

Die Aufgabe wird im Rahmen der vorliegenden Erfindung durch eine gattungsgemäße Vorrichtung zur selektiven, mechanischen Beikrautregulierung gelöst, welche ein Trägerfahrzeug, mindestens eine Sensorikeinheit zur Detektion von Beikräutern und mindestens eine Anordnung von mehreren einzeln angesteuerten Werkzeugaktoreinheiten umfasst, wobei die Aktoren mit dem Rahmen des Trägerfahrzeugs verbunden sind und durch dieses über die zu bearbeitende Fläche gefahren werden sowie durch i n Synchronisation mit Sensorikeinheit und Fahrtweg des Trägerfahrzeugs gesteuerte, zumindest teilweise vertikale Hübe jeweils mindestens ein Werkzeug von einer Ruhe- in eine Arbeitsposition verschieben, wobei das Werkzeug mindestens dann in Arbeitsposition gebracht wird, wenn die Sensorikeinheit an der Stelle des Feldes, wo sich das Werkzeug befindet, ganz oder teilweise mindestens ein zu regulierendes Beikraut erkannt hat, und des Weiteren die einzelnen Aktoren um eine mindestens Achse quer zu Fahrt- und Hubrichtung drehbar gelagert oder zumindest in Fahrtrichtung verschiebbar gelagert sind und in ihrer Ausgangslage gegen jeweils mindestens einen Kraftspeicher vorgespannt sind, sodass das Werkzeug im Falle des Auftreffens auf mindestens ein festes Hindernis in der Arbeitsposition entgegen der Fahrtrichtung ausweichen kann, hierbei eine Rückstellkraft im Kraftspeicher aufbaut und nach Überfahren des festen Hindernisses oder nach Rückholung des Werkzeuges in Ruheposition durch den Aktor die Werkzeugaktoreinheit durch Abbauen der Rückstellkraft im Kraftspeicher in Fahrrichtung in die Ausgangslage zurückschnellt, wobei die Aktoren in einer Art und Weise angesteuert werden, dass die Zeit, die sich einzelne Werkzeuge in Arbeitsposition bei Auftreffen auf ein Hindernis befinden können, begrenzt ist, sodass das Trägerfahrzeug in dieser Zeit maximal einen solchen Fahrtweg zurücklegt, dass das Werkzeug vor Erreichen einer maximal zulässigen Rückstellkraft im Kraftspeicher stets in seine Ruheposition zurückgeführt wird. Dies hat den Vorteil, dass der für die Ausweichbewegung vorzuhaltende Bauraum verkleinert werden kann, da eine definiert maximale Ausweichbewegung angenommen werden kann.

In einer Ausgestaltung der erfindungsgemäßen Vorrichtung wird die im vorherigen Absatz beschriebene Rückführung der Werkzeuge in Ruhelage vor Überschreiten eines maximalen Ausweichweges bzw. einer maximalen Rückstellkraft realisiert, indem die einzelnen Werkzeugaktoreinheiten mit zusätzlicher Sensorik, beispielsweise Tastsensoren, Induktivsensoren oder Winkelsensoren, ausgestattet sind, die eine Ausweichbewegung des Werkzeuges entgegen der Fahrrichtung detektiert und bei Detektion eines bestimmten Grades einer Ausweichbewegung der Aktor unmittelbar angesteuert wird, um das Werkzeug in seine Ruhelage zu bringen, bevor die maximal zulässige Rückstellkraft erreicht wird. Dies hat den Vorteil, dass die Aktoren hier auch beliebig lange Strecken in Arbeitsposition zurücklegen können, sofern Sie nicht auf ein festes Hindernis treffen, und trotzdem der Ausweichbewegung vorzuhaltende Bauraum verkleinert werden kann.

In einer Ausgestaltung der erfindungsgemäßen Vorrichtung wird die im vorletzten Absatz beschriebene Rückführung der Werkzeuge in Ruhelage vor Überschreiten eines maximalen Ausweichweges bzw. einer maximalen Rückstellkraft realisiert, indem die Ansteuerung der Aktoren so definiert ist, dass die Werkzeuge stets nur einen definierten maximalen Fahrtweg des Trägerfahrzeugs in Arbeitsposition verbringen dürfen, wobei dieser maximale Fahrtweg so definiert ist, dass auch bei Auftreffen auf ein festes Hindernis unmittelbar nach Erreichen der Arbeitsposition die maximal zulässige Rückstellkraft vor Rückführung i n die Ruheposition nicht überschritten wird. Dies hat den Vorteil, dass die genannte Reduktion des vorzuhaltenden Bauraums für die Ausweichbewegung möglich ist und keine Zusatzsensorik für diese Funktionalität erforderlich ist.

Diese Vorrichtung beziehungsweise das Ihren Einsatz umfassende Verfahren zur selektiven, mechanischen Beikrautregulierung sind insbesondere vorteilhaft, wenn zufällig verteilte Hindernisse, wie beispielsweise Steine, Müll oder Metallbruch von Maschinen vorhergegangener Arbeitsgänge, im Bearbeitungshorizont der zu bearbeitenden Fläche nicht ausgeschlossen werden können, beziehungsweise nicht vorherig abgesucht oder separiert wurden. Insbesondere im Falle einer sehr hohen Auflösung der Beikrautregulierung, beispielsweise mit Rastermaßen von 0,5 bis 2 cm, welche sehr fein konstruierte Werkzeuge erfordert, wäre dieser Aufwand des Absuchens oder Separierens der Flächen von Steinen oder ähnlichen Festkörpern ab dieser Größe als Voraussetzung der selektiven Beikrautregulierung nicht wirtschaftlich darstellbar.

Die erfindungsgemäße Vorrichtung beziehungsweise das erfindungsgemäße Verfahren vermeidet die Notwendigkeit der Bereinigung fester Hindernisse und erlaubt auch auf für andere Verfahren unvorteilhaften Flächen einen robusten und standfesten Dauereinsatz.

Als Trägerfahrzeug für die erfindungsgemäße Vorrichtung eignen sich beispielsweise autonome Feldroboter, Kombinationen aus bemannten oder unbemannten Traktoren und landwirtschaftlichen Anbaugeräten, die durch den Traktor gezogen oder getragen werden können, oder bemannte oder unbemannte landwirtschaftliche Selbstfahrer.

Die für erfindungsgemäße Vorrichtung erforderliche, mindestens eine Sensorikeinheit umfasst einen oder mehrere bildgebende oder nicht-bildgebende Sensoren. Als Sensoren eignen sich insbesondere Kameras, 3D-Messsysteme, wie Lichtschnitt- oder Time-of-Flight-Sensoren, Hyperspektrale Systeme oder Radarsysteme. Weiterhin können Hilfssensoren, wie Drehgeber oder Helligkeitssensoren umfasst sein. Außerdem kann die Sensorikeinheit weitere Hilfsmittel, wie Abschattung, Beleuchtung oder Montagevorrichtungen umfassen. Weiterhin umfasst die Sensorikeinheit eine oder mehrere erforderliche Recheneinheiten zur Detektion von Beikräutern oder Beikrautbestandteilen in den Sensordaten. Die Recheneinheiten umfassen übliche Komponenten, wie Prozessor, Arbeitsspeicher, Persistenten Speicher, Schnittstellen, et cetera, sowie eines oder mehrere Computerprogramme mit Befehlen, welche die Detektion von Beikräutern oder Beikrautbestandteilen sowie weitere Steuerungs- und Regelungsaufgaben implementieren. Für die Durchführung von Bildauswertung eignen sich insbesondere GPGPU-(General Purpose Graphics Processing Unit) oder FPGA- (Field-programmable Gate Array), welche ebenfalls durch die Recheneinheit einfach oder mehrfach umfasst sein können. Gegebenenfalls erforderliche Klassifizierer oder Datengrundlagen für die Detektion von Beikräutern oder Beikrautbestandteilen können auf der oder den Recheneinheiten lokal gespeichert sein, oder über Datenschnittstellen oder über eine oder mehrere Mensch-Maschine-Schnittstelle eingebracht werden. Weiterhin umfasst die Sensorikeinheit Spannungsversorgung und elektrische oder logische Schnittstellen zur Ansteuerung der einzelnen Aktoren der Anordnung von Werkzeugaktoreinheiten, beispielsweise durch Ansteuerung hydraulischer oder pneumatischer Ventile oder durch Ansteuerung von Motoren oder elektrischen Schaltern.

Die für die erfindungsgemäße Vorrichtung erforderliche, mindestens eine Anordnung von mehreren einzeln angesteuerten Werkzeugaktoreinheiten besteht aus mehreren Werkzeugaktoreinheiten, die mit der Sensorikeinheit durch einen Rahmen verbunden sind und mit Ihr durch das Trägerfahrzeug über die zu bearbeitende Fläche gefahren werden. Die Aktoren der Werkzeugaktoreinheiten führen zumindest teilweise vertikale Hubbewegungen durch, um jeweils ein oder mehrere Werkzeuge von einer Ruheposition in eine Arbeitsposition zu verfahren. Die Aktoren können in Synchronisation mit dem Fahrtweg des Trägerfahrzeugs einzeln durch die Sensorikeinheit angesteuert werden. Des Weiteren sind die Werkzeugaktoreinheiten gelagert und gegen einen Kraftspeicher vorgespannt, um im Falle des Auftreffens des Werkzeugs auf ein festes Hindernis eine Ausweichbewegung vollziehen zu können und anschließend in Ihre Ausgangslage zurückzuschnellen.

Als Aktoren im Sinne der erfindungsgemäßen Vorrichtung eignen sich vorzugsweise pneumatische oder hydraulische Zylinder oder mechanisch oder elektromechanisch angetriebene Stempel oder Linearführungen.

Als Werkzeuge im Sinne der erfindungsgemäßen Vorrichtung eignen sich eine Vielzahl verschiedener Mittel, welche schädigend auf das Beikraut einwirken können und für Ihre Wirksamkeit aus einer Ruheposition, welche typischerweise oberhalb des Wuchsbereiches der Pflanzen liegt, in eine Arbeitsposition, welche typischerweise im Wuchs- oder Wurzelbereich der Pflanzen liegt, verschoben werden müssen. Beispielsweise, aber nicht ausschließlich, können diese Werkzeuge ausgebildet sein als Mikrogrubberzinken, kleine Gänsefussschare, Reißhaken, Stempel mit verschiedenartig (beispielsweise flach, rund, spitz, profiliert) ausgeformten Enden, Schnapper oder Greifer, rotierende Fräsköpfe oder ähnliches.

Als erfindungsgemäße Kraftspeicher für die Rückstellung der Ausweichbewegung werden vorzugsweise mechanische Federn genutzt, die diese Funktionalität Bauraum- und Kosten-sparend für jede einzelne Werkzeugaktoreinheit umsetzbar machen. Alternativ eignen sich beispielsweise pneumatische oder hydraulische Zylinder, die jeweils gegen eine oder mehrere Druckspeicher angeschlossen sind.

Weitere Vorteile der erfindungsgemäßen Vorrichtung ergeben sich in speziellen Ausgestaltungen und Abwandlungen.

In einer Ausgestaltung der erfindungsgemäßen Vorrichtung, bei der es sich bei den einzeln angesteuerten Aktoren um hydraulische oder pneumatische Zylinder handelt, werden die Kolbenstangen dieser Zylinder mit einer Verlängerung ausgestattet, die in einer zusätzlichen Linearführung läuft. Dies hat den Vorteil, dass die Aktorwerkzeugeinheit auf diese Weise höhere Kräfte quer zur Translationsrichtung der Kolbenstange, insbesondere in Fahrtrichtung, aufnehmen kann und somit höhere Vorspannungen des Kraftspeichers für die Rückstellung der Ausweichbewegung und höhere Rückstellkräfte möglich sind.

In einer Ausgestaltung der erfindungsgemäßen Vorrichtung, bei der es sich bei den einzeln angesteuerten Aktoren um hydraulische oder pneumatische Zylinder handelt, werden die einzelnen Werkzeugaktoreinheiten mit jeweils mindestens einem weiteren Kraftspeicher versehen, welcher Energie in Translationsrichtung der Kolbenstange aufnimmt. Dieser Kraftspeicher nimmt die Bremsenergie beim Erreichen der Endlagen der Zylinder auf und gibt diese bei der anschließenden Rückführung nach Wechsel der Druckbeaufschlagung der Zylinder wieder ab. Hierdurch wird eine höhere Dynamik der Wechselspiele erzielt, was der Erhöhung der Auflösung der Selektivität der Beikrautregulierung und der Flächenleistung zuträglich ist.

In einer Ausgestaltung der erfindungsgemäßen Vorrichtung bei der es sich bei den einzeln angesteuerten Aktoren um hydraulische oder pneumatische Zylinder handelt, werden die Kolbenstangen dieser Zylinder mit einer Verlängerung ausgestattet, die in einer zusätzlichen Linearführung läuft und eine Verdrehsicherung umfasst. Hierdurch wird der Einsatz von Werkzeugen, die verdrehsicher laufen müssen, durch eine Kosten- und Bauraum-sparenden Multifunktionsführung ermöglicht.

In einer Ausgestaltung der erfindungsgemäßen Vorrichtung sind am Trägerfahrzeug mehrere Bekrautregulierungseinheiten montiert, umfassend jeweils mindestens eine Sensorikeinheit zur Detektion von Beikräutern und mindestens eine Anordnung von mehreren einzeln angesteuerten Werkzeugaktoreinheiten. Dieses ermöglicht eine höhere Flächenleistung. Vorzugsweise werden die Beikrautregulierungseinheiten dabei in Abständen montiert, die den Abständen der Pflanzreihen untereinander entsprechen.

Es wird ausdrücklich darauf hingewiesen, dass die vorstehend beschriebenen Ausgestaltungen der Erfindung jeweils für sich, aber auch in einer beliebigen Kombination untereinander mit dem Gegenstand des Hauptanspruchs kombinierbar sind, soweit dem keine zwingenden technischen Hindernisse entgegenstehen.

Weitere Abwandlungen und Ausgestaltungen des erfindungsgemäßen Verfahrens lassen sich der nachfolgenden elementweisen Beschreibung und den Zeichnungen entnehmen.

Die erfindungsgemäße Vorrichtung soll nun anhand einiger Ausführungsbeispielen äher beschrieben werden. Es zeigen:
**Abbildung 1****:** eine mögliche Werkzeugaktoreinheit inklusive Kraftspeicher für die Ausweichbewegung und Spanner für die Vorspannung desselben Kraftspeichers in der Seitenansicht,
**Abbildung 2****:** eine mögliche Werkzeugaktoreinheit mit Werkzeug in Ruheposition und die gleiche Werkzeugaktoreinheit mit Werkzeug in Arbeitsposition, jeweils in der Seitenansicht,
**Abbildung 3****:** zwei Seitenansichten einer möglichen Werkzeugaktoreinheit mit Werkzeug in Arbeitsposition inklusive Kraftspeicher für die Ausweichbewegung, einmal in Ausgangslage, das heißt vor der Ausweichbewegung, und einmal in Ausweichlage,
**Abbildung 4****:** die maximale Ausweichlage einer möglichen Werkzeugaktoreinheit mit Werkzeug in Arbeitsposition inklusive Kraftspeicher für die Ausweichbewegung,
**Abbildung 5****:** eine mögliche einzelne Beikrautregulierungseinheit,
**Abbildung 6****:** eine mögliche mehrreihige Vorrichtung zur mehrreihigen, selektiven mechanischen Beikrautregulierung im Feldeinsatz.

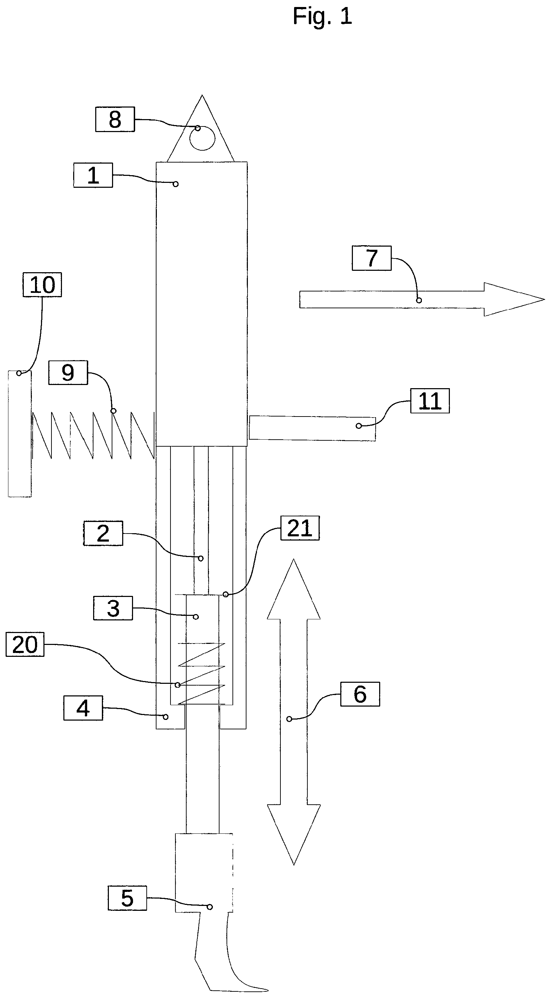

**Abbildung 1** zeigt eine mögliche Werkzeugaktoreinheit inklusive Kraftspeicher für die Ausweichbewegung und Spanner für die Vorspannung desselben Kraftspeichers in der Seitenansicht. Der Aktor **1** ist hier als Pneumatikzylinder ausgeführt. Er verschiebt die Kolbenstange **2,** die mit einer Kolbenstangenverlängerung **3** versehen ist. Die Kolbenstangenverlängerung **3** wird durch die Zusatzführung der Translationsachse **4,** die der Aufnahme höherer Querkräfte dient, hindurch verschiebbar geführt. An der Kolbenstangenverlängerung **3** ist das Werkzeug **5** befestigt. Kolbenstange **2,** Kolbenstangenverlängerung **3** und Werkzeug **5** werden durch den Aktor **1** in Richtung des Pfeiles **6** teilweise vertikal verschoben. Innerhalb der Anordnung mehrerer Werkzeugaktoreinheiten der Beikrautregulierungseinheit bewegt sich die Werkzeugaktoreinheit in Fahrtrichtung des Fahrzeugs **7.** Im Drehpunkt **8** ist die einzelne Werkzeugaktoreinheit hier drehbar gelagert. Der Kraftspeicher für die Ausweichbewegung **9** ist gegen einen Anschlag **10** fixiert und durch den Spanner **11** vorgespannt. Innerhalb der Zusatzführung für die Translationsachse befindet sich ein weiterer Kraftspeicher für die Bremsenergieaufnahme **21.** Dieser wird in der Endlage des Aktors in Arbeitsposition durch den Anschlag **21** gespannt und kann die aufgenommene Energie wieder abgeben, um die Rückführbewegung zur Ruheposition zu beschleunigen.

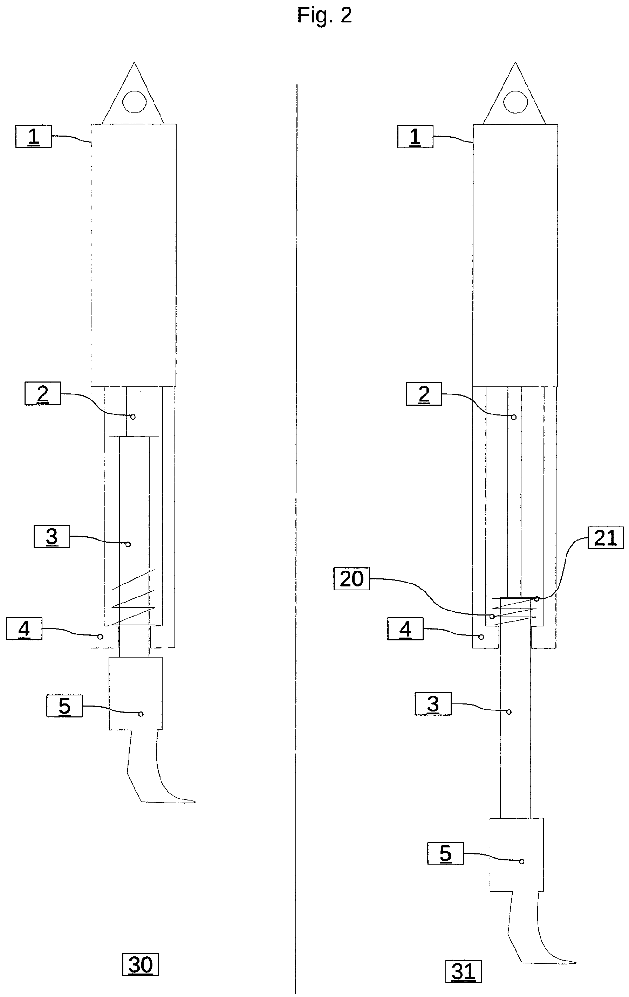

**Abbildung 2** zeigt eine mögliche Werkzeugaktoreinheit mit Werkzeug in Ruheposition und die gleiche Werkzeugaktoreinheit mit Werkzeug in Arbeitsposition. In der linken Bildhälfte ist die Werkzeugaktoreinheit mit Werkzeug **5** in Ruheposition **30** in der Seitenansicht abgebildet. Der Aktor **1,** hier als Pneumatikzylinder ausgeführt, hat seine Kolbenstange **2** weitgehend eingezogen. Die verbundene Kolbenstangenverlängerung **3** ist gefolgt und das verbundene Werkzeug **5** befindet sich nun in Ruheposition. In der rechten Bildhälfte ist die Werkzeugaktoreinheit mit Werkzeug **5** in Arbeitsposition **31** in der Seitenansicht abgebildet. Der Aktor **1,** hier als Pneumatikzylinder ausgeführt, hat seine Kolbenstange **2** weitgehend ausgeschoben. Die verbundene Kolbenstangenverlängerung **3** ist gefolgt und das verbundene Werkzeug **5** befindet sich nun in Arbeitsposition. Der Kraftspeicher für Bremsenergieaufnahme **20** ist zwischen Anschlag **21** und Zusatzführung der Translationsachse der Kolbenstange **4** gespannt. Die aufgenommene Energie kann der Kraftspeicher bei Beginn der Rückführbewegung wieder abgeben, um die Rückführbewegung zur Ruheposition zu beschleunigen.

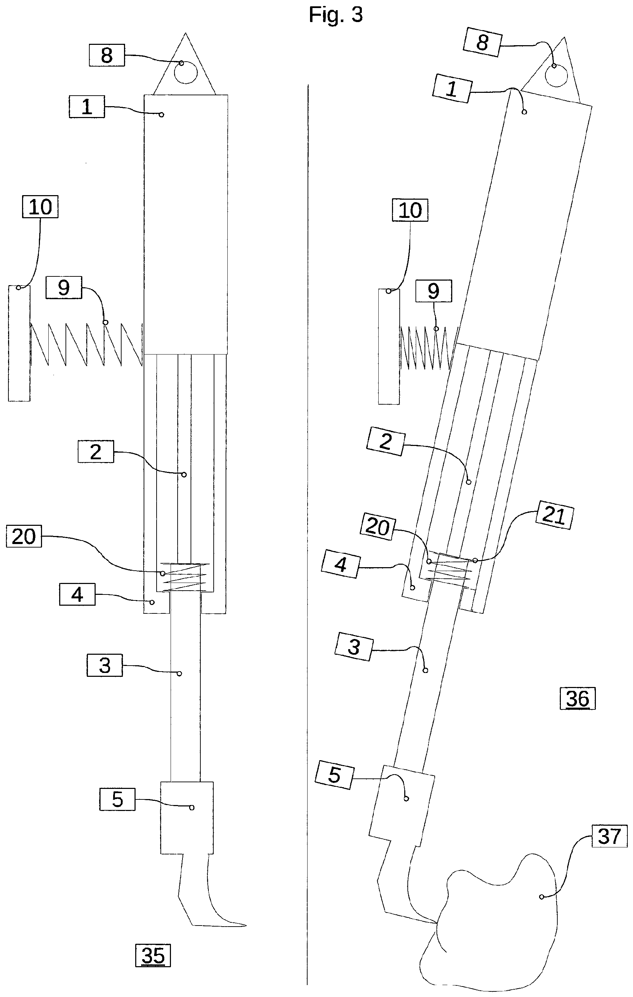

**Abbildung 3** zeigt zwei Seitenansichten einer möglichen Werkzeugaktoreinheit mit Werkzeug in Arbeitsposition inklusive Kraftspeicher für die Ausweichbewegung, einmal i n Ausgangslage, das heißt vor der Ausweichbewegung, und einmal in Ausweichlage. In der linken Bildhälfte befindet sich die Werkzeugaktoreinheit In Ausgangslage **35.** Der Aktor **1,** hier ausgeführt als Pneumatikzylinder, hat die Kolbenstange **2** vollständig ausgeschoben. Die Kolbenstangenverlängerung **3** ist durch die Zusatzführung **4** hindurch ausgeschoben und das Werkzeug **5** in Arbeitsposition. Der Kraftspeicher für die Aufnahme von Bremsenergie **20** ist durch den Anschlag **21** gespannt. In der Ausgangslage ist keine Drehung um den Drehpunkt **8** erfolgt. Der Kraftspeicher für die Ausgangslage ist lediglich vorgespannt zwischen Aktor **1** und/oder Zusatzführung **4** auf der Einen und Anschlag **10** auf der anderen Seite. In der rechten Bildhälfte befindet sich die Werkzeugaktoreinheit in Ausweichlage **36.** Der Aktor **1,** hier ausgeführt als Pneumatikzylinder, hat die Kolbenstange **2** vollständig ausgeschoben. Die Kolbenstangenverlängerung **3** ist durch die Zusatzführung **4** hindurch ausgeschoben und das Werkzeug **5** in Arbeitsposition. Der Kraftspeicher für die Aufnahme von Bremsenergie **20** ist durch den Anschlag **21** gespannt. In der Ausweichlage ist eine Drehung um den Drehpunkt **8** erfolgt. Das Werkzeug **5** ist auf ein festes Hindernis **37** getroffen, welches in Kombination mit der weiteren Fahrt der Vorrichtung zu der Ausweichbewegung geführt hat. Der Kraftspeicher **9** ist nun gegen den Anschlag **10** mit einer Rückstellkraft gespannt.

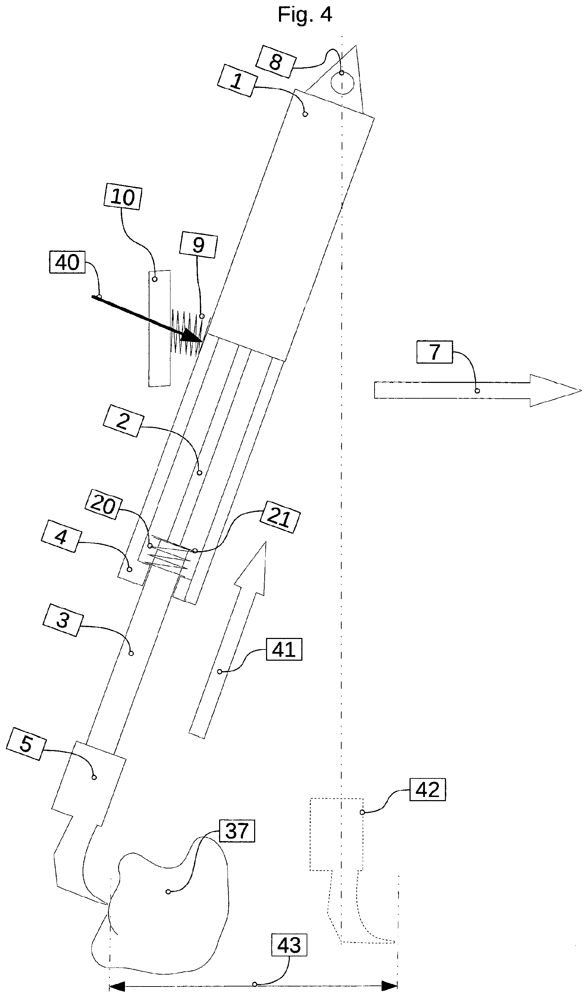

**Abbildung 4** zeigt die maximale Ausweichlage einer möglichen Werkzeugaktoreinheit mit Werkzeug in Arbeitsposition inklusive Kraftspeicher für die Ausweichbewegung. Der Aktor **1,** hier ausgeführt als Pneumatikzylinder, hat die Kolbenstange **2** vollständig ausgeschoben. Die Kolbenstangenverlängerung **3** ist durch die Zusatzführung **4** hindurch ausgeschoben und das Werkzeug **5** in Arbeitsposition. Der Kraftspeicher für die Aufnahme von Bremsenergie **20** ist durch den Anschlag **21** gespannt. In der Ausweichlage ist eine Drehung um den Drehpunkt **8** erfolgt. Das Werkzeug **5** ist auf ein festes Hindernis **37** getroffen, welches in Kombination mit der weiteren Fahrt der Vorrichtung in Fahrrichtung **7** zu der Ausweichbewegung geführt hat. Der Kraftspeicher **9** ist nun gegen den Anschlag **10** mit einer maximalen Rückstellkraft **40** gespannt. Um Schäden an der Vorrichtung zu vermeiden, muss nun zwangsweise eine Rückführung **41** des Werkzeugs durch den Aktor in die Arbeitsposition angesteuert werden, unabhängig von der Bearbeitungsnotwendigkeit an der betreffenden Stelle des Feldes. Die Strecke **43** entspricht dem maximalen Weg, den das Fahrzeug mit Werkzeug in Arbeitsposition bei Auftreffen auf ein Hindernis zurücklegen darf, ausgehend von der hier virtuellen Ausgangslage **42** des Werkzeugs zur dargestellten maximalen Ausweichlage. Es ist hervorzuheben, dass hier durch die Drehung noch keine für das Überfahren des Hindernisses **37** erforderliche Höhe gewonnen wurde. Diese wird erst durch Rückholung des Werkzeuges **5** erreicht. Der erforderliche Drehwinkel der Ausweichbewegung und damit der erforderliche Bauraum kann somit durch die angesteuerte Rückholung **41** reduziert werden.

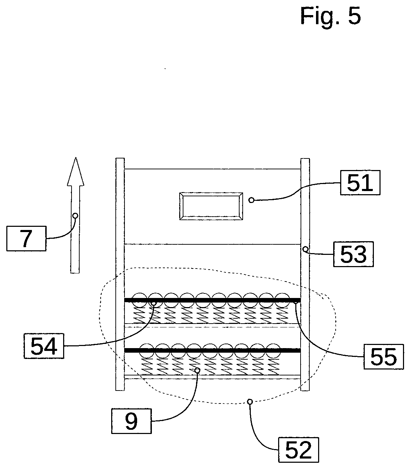

**Abbildung 5** zeigt ein Beispiel für eine einzelne Beikrautregulierungseinheit in der Draufsicht. Diese umfasst eine Sensoreinheit **51,** Verbindungsrahmen für Sensorikeinheit und Aktoranordnung **53** und eine Anordnung von mehreren einzeln angesteuerten Werkzeugaktoreinheiten **52** umfassend mehrere Werkzeugaktoreinheiten **54,** welche durch die Rundträger **55** jeweils drehbar gelagert aufgehängt sind und mit jeweils mindestens einem Kraftspeicher für die Ausweichbewegung **9** vorgespannt sind. Die Werkzeugaktoreinheiten sind mehrreihig angeordnet, hier zweireihig, wobei die Werkzeugaktoreinheiten der zweiten Reihe zentral zwischen Jeweils Zweien der ersten Reihe positioniert sind, um die Auflösung der Selektivität der Beikrautregulierung im Feld zu erhöhen. Die Beikrautregulierungseinheit wird in Fahrtrichtung des Fahrzeugs **7** über das Feld bewegt.

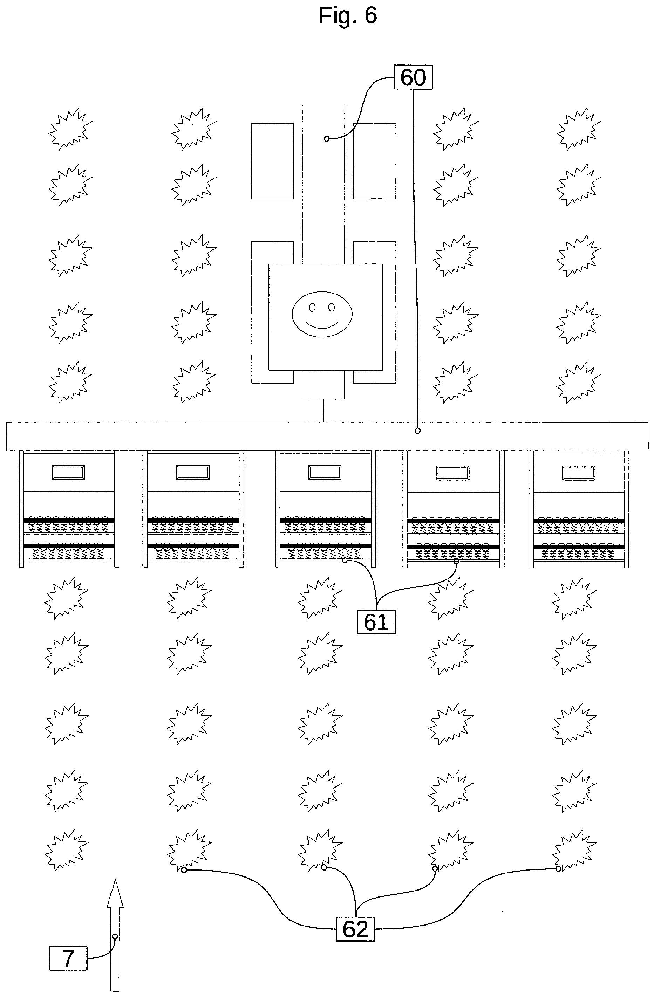

**Abbildung 6** zeigt eine mögliche mehrreihige Vorrichtung zur mehrreihigen, selektiven mechanischen Beikrautregulierung im Feldeinsatz. Als Trägerfahrzeug dient hier eine Traktor-Anbaugerät-Kombination **60.** Jeweils über den Pflanzreihen in gleichem Abstand wie die Pflanzreihen der Nutzpflanzen **62** ist eine Beikrautregulierungseinheit am Trägerfahrzeug montiert. Die Vorrichtung wird in Fahrtrichtung des Trägerfahrzeugs **7** über das Feld bewegt.

Die vorstehenden Ausführungsbeispiele dienen nur der Erläuterung der Erfindung. Die Erfindung ist nicht auf die vorstehend beschriebenen Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugszeichenliste

1 Aktor, hier Pneumatikzylinder
2 Kolbenstange des Aktors, hier Pneumatikzylinders
3 Kolbenstangenverlängerung
4 Zusatzführung Translationsachse
5 Werkzeug
6 Bewegungsrichtung Kolbenstange, Kolbenstangenverlängerung und Werkzeug
7 Fahrtrichtung Fahrzeug
8 Drehbare Lagerung Aktorwerkzeugeinheit
9 Kraftspeicher für Ausweichbewegung, hier mechanische Feder
10 Anschlag für Kraftspeicher für Ausweichbewegung
11 Vorspanner für Kraftspeicher für Ausweichbewegung
20 Kraftspeicher für Bremsenergieaufnahme
21 Anschlag für Kraftspeicher für Bremsenergieaufnahme
30 Werkzeugaktoreinheit mit Werkzeug in Ruheposition
31 Werkzeugaktoreinheit mit Werkzeug in Arbeitsposition
35 Werkzeugaktoreinheit inklusive Kraftspeicher für Ausweichbewegung in Ausgangslage der Ausweichbewegung
36 Werkzeugaktoreinheit inklusive Kraftspeicher für Ausweichbewegung in Ausweichlage
37 Festes Hindernis in Arbeitsposition des Werkzeugs
40 Maximal zulässige Rückstellkraft des Kraftspeichers
41 Rückholbewegung des Werkzeuges zur Ruheposition
42 Virtuelle Position des Werkzeuges ohne Ausweichbewegung
43 Maximal zulässiger Fahrtweg mit Werkzeug in Arbeitsposition bei Auftreffen auf ein festes Hindernis
51 Sensorikeinheit
52 Anordnung von mehreren einzeln angesteuerten Werkzeugaktoreinheiten
53 Verbindungsrahmen Sensorikeinheit und Aktoranordnung
54 Werkzeugaktoreinheit
55 Rundträger für drehbare Aufhängung der Werkzeugaktoreinheit
60 Trägerfahrzeug, hier Traktor-Anbaugerät-Kombination
61 Beikrautregulierungseinheiten
62 Pflanzreihen der Nutzpflanzen

### Zitierte Nicht-Patentliteratur

[NP1] "Robovator, Mechanisches Selektivhacksystem" https://www.kresslandtechnik. eu/de/produkte/robovator.php, abgerufen am 09.03.2020.
[NP2] "Robocrop InRow Weeder", https://garford.com/de/robocrop-inrow-weeder/, abgerufen am 09.03.2020.
[NP3] D. C. Slaughter, D. K. Giles, and D. Downey. "Autonomous robotic weed control systems:A review." Computers and electronics in agriculture, 61(1):63-78, 2008.
[NP4] Frederik Langsenkamp, Fabian Sellmann, Maik Kohlbrecher, Arnd Kielhorn, Wolfram Strothmann, Andreas Michaels, Amo Ruckelshausen, and Dieter Trautz. Tube Stamp for mechanical intra-row individual Plant Weed Control, 2014, https://www.hsosnabrueck. de/fileadmin/HSOS/Homepages/COALA/Veroeffentlichungen/2014-CIGR_2014 Tube _Stamp_for_mechanical_intrarow_individual Plant Weed_Control.pdf , abgerufen am 09.03.2020.
[NP5] Wolfram Strothmann, Arno Ruckelshausen, Joachim Hertzberg, Christian Scholz, Frederik Langsenkamp, Plant classification with In-Field-Labeling for crop/weed discrimination using spectral features and 3D surface features from a multi-wavelength laser line profile system, Computers and Electronics in Agriculture, Volume 134, March 2017, Pages 79-93, ISSN 0168-1699, http://dx.doi.org/10.1016/i.compag.2017.01.003 .

### Zitierte Patentliteratur

DE102013222776 (A1) - Einrichtung, System und Verfahren zur Beschädigung eines Beikrauts
DE102016224733 (A1) - WEED DAMAGE DEVICE
DE102016217816 (A1) - Unkrautbeschädigungsvorrichtung mit Reinhaltungsfunktion
DE102018120756 (A1) - Mobile Analyse- und Bearbeitungsvorrichtung, Verfahren und Trägersystem
DE102011114901 (A1) - Vorrichtung zum mechanischen Entfernen von Pflanzen, insbesondere Unkräutern
US2018139947 (A1) - WEED CONTROL DEVICE

## Patentansprüche

1. Vorrichtung zur selektiven, mechanischen Beikrautregulierung bestehend aus einem Trägerfahrzeug **(60),** mindestens einer Sensorikeinheit zur Detektion von Beikräutern **(51)** und mindestens einer Anordnung von mehreren einzeln angesteuerten Aktoren **(52),** welche mit dem Rahmen des Trägerfahrzeugs **(60)** verbunden sind und durch dieses über die zu bearbeitende Fläche gefahren werden sowie durch in Synchronisation mit Sensorikeinheit **(51)** und Fahrtweg des Trägerfahrzeugs **(7)** gesteuerte, zumindest teilweise vertikale Hübe jeweils mindestens ein Werkzeug **(5)** von einer Ruhe- **(30)** in eine Arbeitsposition **(31)** verschieben, wobei das Werkzeug **(5)** mindestens dann in Arbeitsposition **(31)** gebracht wird, wenn die Sensorikeinheit **(51)** an der Stelle des Feldes, wo sich das Werkzeug **(5)** befindet, ganz oder teilweise mindestens ein zu regulierendes Beikraut erkannt hat, wobei die einzelnen Aktoren **(1)** um eine mindestens Achse quer zu Fahrt- und Hubrichtung drehbar gelagert oder zumindest in Fahrtrichtung verschiebbar gelagert sind und in ihrer Ausgangslage **(35)** gegen jeweils mindestens einen Kraftspeicher **(9)** vorgespannt sind, sodass das Werkzeug **(5)** im Falle des Auftreffens auf mindestens ein festes Hindernis **(37)** in der Arbeitsposition **(31)** entgegen der Fahrtrichtung **(7)** ausweichen kann, hierbei eine Rückstellkraft im Kraftspeicher **(9)** aufbaut und nach Überfahren des festen Hindernisses **(37)** oder nach Rückholung des Werkzeuges **(5)** in Ruheposition **(30)** durch den Aktor **(1)** die Werkzeugaktoreinheit durch Abbauen der Rückstellkraft im Kraftspeicher **(9)** in Fahrtrichtung in ihre Ausgangslage zurückschnellt, **dadurch gekennzeichnet, dass** die Aktoren in einer Art und Weise angesteuert werden, dass die Zeit, die sich einzelne Werkzeuge **(5)** in Arbeitsposition **(31)** bei Auftreffen auf ein festes Hindernis **(37)** befinden können, begrenzt ist, sodass das Trägerfahrzeug **(60)** in dieser Zeit maximal einen solchen Fahrtweg **(43)** zurücklegt, dass das Werkzeug **(5)** vor Erreichen einer maximal zulässigen Rückstellkraft **(40)** im Kraftspeicher **(5)** stets in seine Ruheposition **(30)** zurückgeführt wird.

2. Vorrichtung nach Anspruch 1, **dadurch gekennzeichnet, dass** die Ansteuerung der Aktoren so definiert ist, dass die Werkzeuge **(5)** stets nur einen definierten maximalen Fahrtweg des Trägerfahrzeugs **(60)** in Arbeitsposition **(31)** verbringen dürfen, wobei dieser maximale Fahrtweg so definiert ist, dass auch bei Auftreffen auf ein festes Hindernis **(37)** unmittelbar nach Erreichen der Arbeitsposition **(31)** die maximal zulässige Rückstellkraft **(40)** vor Rückführung in die Ruheposition **(30)** nicht überschritten wird.

3. Vorrichtung nach einem der Ansprüche 1 oder 2 **dadurch gekennzeichnet, dass** die einzelnen Werkzeugaktoreinheiten mit zusätzlicher Sensorik ausgestattet sind, die eine Ausweichbewegung des Werkzeuges **(5)** entgegen der Fahrrichtung detektiert und bei Detektion eines bestimmten Grades einer Ausweichbewegung der Aktor **(1)** unmittelbar angesteuert wird, um das Werkzeug **(5)** in seine Ruheposition **(30)** zu bringen, bevor die maximal zulässige Rückstellkraft **(40)** erreicht wird.

4. Vorrichtung nach einem der vorhergehenden Ansprüche, **dadurch gekennzeichnet, dass** es sich bei dem mindestens einen Kraftspeicher für die Ausweichbewegung **(9)** der einzelnen Werkzeugaktoreinheiten um mindestens eine mechanische Feder handelt.

5. Vorrichtung nach einem der Ansprüche 1 bis 3, **dadurch gekennzeichnet, dass** es sich bei dem mindestens einen Kraftspeicher für die Ausweichbewegung **(9)** der einzelnen Werkzeugaktoreinheiten um mindestens pneumatischen oder hydraulischen Zylinder mit mindestens einer gekoppelten Druckspeichereinheit handelt.

6. Vorrichtung nach einem der Ansprüche 1 bis 3, **dadurch gekennzeichnet, dass** es sich bei dem mindestens einen Kraftspeicher für die Ausweichbewegung **(9)** der einzelnen Werkzeugaktoreinheiten um mindestens einen elektromechanischen Aktor handelt.

7. Vorrichtung nach einem der vorhergehenden Ansprüche, **dadurch gekennzeichnet, dass** es sich bei den einzeln angesteuerten Aktoren **(1)** um mechanisch oder elektromechanisch angetriebene Stempel handelt.

8. Vorrichtung nach einem der Ansprüche 1 bis 6, **dadurch gekennzeichnet, dass** es sich bei den einzeln angesteuerten Aktoren **(1)** um hydraulische oder pneumatische Zylinder handelt.

9. Vorrichtung nach Anspruch 8, **dadurch gekennzeichnet, dass** es sich bei den einzeln angesteuerten Aktoren **(1)** um hydraulische oder pneumatische Zylinder handelt, bei denen die Kolbenstange **(2)** eine zusätzliche Verlängerung **(3)** und eine zusätzliche Führung entlang der Translationsachse **(4)** aufweist, welche mit dem einzelnen Aktor **(1)** verbunden ist und die Ausweichbewegung ebenfalls nachvollzieht.

10. Vorrichtung nach Anspruch 9, **dadurch gekennzeichnet, dass** die zusätzliche Führung entlang der Translationsachse **(4)** weiterhin eine Verdrehsicherung für die Kolbenstange **(2)** inklusive Kolbenstangenverlängerung **(3)** aufweist.

11. Vorrichtung nach Anspruch 9, **dadurch gekennzeichnet, dass** die Kolbenstange **(2)** weiterhin mit einem Anschlag **(21)** verbunden ist, welcher in mindestens einer Endlage des Aktors **(1)** gegen mindestens einen weiteren Kraftspeicher zur Aufnahme von Bremsenergie **(20)** spannt und die Bremsenergie in bei Umkehr der Bewegungsrichtung als zusätzliche Beschleunigungsenergie freigibt.

12. Vorrichtung nach einem der vorhergehenden Ansprüche, **dadurch gekennzeichnet, dass** es sich bei dem Trägerfahrzeug um einen autonomen Feldroboter handelt.

13. Vorrichtung nach einem der vorhergehenden Ansprüche, **dadurch gekennzeichnet, dass** es sich bei dem Trägerfahrzeug um eine Kombination aus Traktor und Anbaugerät **(60)** handelt.

14. Vorrichtung nach einem der vorhergehenden Ansprüche, **dadurch gekennzeichnet, dass** es sich bei dem Trägerfahrzeug um einen landwirtschaftlichen Selbstfahrer handelt.

15. Vorrichtung nach einem der vorhergehenden Ansprüche, **dadurch gekennzeichnet, dass** an dem Trägerfahrzeug **(60)** mehrere Bekrautregulierungseinheiten **(61)** montiert sind, umfassend jeweils mindestens eine Sensorikeinheit zur Detektion von Beikräutern **(51)** und mindestens eine Anordnung von mehreren einzeln angesteuerten Werkzeugaktoreinheiten **(52).**

16. Verfahren zur Beikrautregulierung unter Verwendung einer Vorrichtung zur selektiven mechanischen Beikrautregulierung nach einem der vorhergehenden Ansprüche.

17. Verfahren zur Beikrautregulierung nach Anspruch 16, **dadurch gekennzeichnet, dass** die Bekrautregulierungseinheiten (**61**) jeweils quer zur Fahrtrichtung des Trägerfahrzeugs **(7)** in gleichen Abständen wie die Abstände der Pflanzreihen auf dem Feld **(62)** montiert sind und sich jeweils eine Bekrautregulierungseinheit **(61)** im Betrieb oberhalb jeweils einer Pflanzreihe befindet.

18. Computerprogramm, das dazu eingerichtet ist, eine Vorrichtung nach einem der Ansprüche 1 bis 15 anzusteuern.

19. Maschinenlesbares Speichermedium, auf dem ein Computerprogramm nach Anspruch 18 gespeichert ist.

## Claims

1. A device for selective, mechanical weed control consisting of a carrier vehicle (60), of at least one sensor unit for detecting weeds (51) and at least one arrangement of several individually controlled actuators (52), which are connected to the frame of the carrier vehicle (60) and are moved by it over the surface to be processed and, by means of at least partially vertical strokes controlled in synchronization with the sensor unit (51) and the travel path of the carrier vehicle (7), move at least one tool (5) from a rest position (30) into a working position (31), wherein the tool (5) is moved into the working position (31) at least when the sensor unit (51) has detected, either fully or partially, at least one weed to be controlled at the location in the field where the tool (5) is located, wherein the individual actuators (1) are mounted so as to be rotatable about at least one axis transverse to the direction of travel and the direction of stroke, or are mounted so as to be displaceable at least in the direction of travel, and are pretensioned in their starting position (35) against at least one energy storage device (9) in each case, so that the tool (5), in the event of contact with at least one fixed obstacle (37) in the working position (31), can swerve in the opposite direction to the direction of travel (7), thereby building up a restoring force in the energy storage device (9) and, after passing over the fixed obstacle (37) or after the tool (5) has been returned to the rest position (30) by the actuator (1), the tool actuator unit snaps back into its starting position in the direction of travel by releasing the restoring force in the energy storage device (9), **characterized in that** the actuators are controlled in such a way that the time for which individual tools (5) can be in the working position (31) when contacting a fixed obstacle (37) is limited, so that the carrier vehicle (60) covers, within this time, at most such a travel path (43) that the tool (5) is always returned to its rest position (30) before reaching a maximum permissible restoring force (40) in the energy storage device (5).

2. The device according to claim 1, **characterized in that** the control of the actuators is defined in such a way that the tools (5) may only ever travel a defined maximum travel path of the carrier vehicle (60) in the working position (31), wherein this maximum travel path is defined in such a way that, even if a fixed obstacle (37) is contacted immediately after reaching the working position (31), the maximum permissible restoring force (40) is not exceeded before returning to the rest position (30).

3. The device according to one of claims 1 or 2, **characterized in that** the individual tool actuator units are equipped with additional sensors which detect an evasive movement of the tool (5) against the direction of travel and, when a certain degree of evasive movement is detected, the actuator (1) is activated directly in order to bring the tool (5) into its rest position (30) before the maximum permissible restoring force (40) is reached.

4. The device according to one of the preceding claims, **characterized in that** the at least one energy storage device for the evasive movement (9) of the individual tool actuator units is at least one mechanical spring.

5. The device according to one of claims 1 to 3, **characterized in that** the at least one energy storage device for the evasive movement (9) of the individual tool actuator units is at least one pneumatic or hydraulic cylinder with at least one coupled pressure accumulator unit.

6. The device according to one of claims 1 to 3, **characterized in that** the at least one energy storage device for the evasive movement (9) of the individual tool actuator units is at least one electromechanical actuator.

7. The device according to one of the preceding claims, **characterized in that** the individually controlled actuators (1) are mechanically or electromechanically driven stamps.

8. The device according to one of claims 1 to 6, **characterized in that** the individually controlled actuators (1) are hydraulic or pneumatic cylinders.

9. The device according to claim 8, **characterized in that** the individually controlled actuators (1) are hydraulic or pneumatic cylinders, in which the piston rod (2) has an additional extension (3) and an additional guide along the translation axis (4), which is connected to the individual actuator (1) and also follows the evasive movement.

10. The device according to claim 9, **characterized in that** the additional guide along the translation axis (4) also has an anti-rotation device for the piston rod (2) including the piston rod extension (3).

11. The device according to claim 9, **characterized in that** the piston rod (2) is furthermore connected to a stop (21) which, in at least one end position of the actuator (1), presses against at least one further energy storage device for absorbing braking energy (20) and releases the braking energy as additional acceleration energy in when the direction of movement is reversed.

12. The device according to one of the preceding claims, **characterized in that** the carrier vehicle is an autonomous field robot.

13. The device according to one of the preceding claims, **characterized in that** the carrier vehicle is a combination of a tractor and an implement (60).

14. The device according to one of the preceding claims, **characterized in that** the carrier vehicle is an agricultural self-propelled vehicle.

15. The device according to one of the preceding claims, **characterized in that** several weed control units (61) are mounted on the carrier vehicle (60), each comprising at least one sensor unit for detecting weeds (51) and at least one arrangement of several individually controlled tool actuator units (52).

16. A method for weed control using a device for selective mechanical weed control according to one of the preceding claims.

17. A method for weed control according to claim 16, **characterized in that** the weed control units (61) are each mounted transversely to the direction of travel of the carrier vehicle (7) at the same distances as the distances between the planting rows in the field (62) and in each case one weed control unit (61) is located above a respective planting row during operation.

18. A computer program configured to control a device according to any one of claims 1 to 15.

19. A machine-readable storage medium on which a computer program according to claim 18 is stored.

## Revendications

1. Dispositif de régulation mécanique sélective de mauvaises herbes, constitué d'un véhicule porteur (60), d'au moins une unité de détection (51) pour détecter des mauvaises herbes et d'au moins un ensemble de plusieurs actionneurs (52) pilotés individuellement, qui sont reliés au châssis du véhicule porteur (60) et sont déplacés par celui-ci sur la surface à traiter et font coulisser au moins un outil (5) d'une position de repos (30) dans une position de travail (31) par des courses au moins en partie verticales commandées en synchronisation avec l'unité de détection (51) et le trajet du véhicule porteur (7), l'outil (5) étant amené alors au moins dans la position de travail (31) lorsque l'unité de détection (51) a identifié totalement ou en partie au moins une mauvaise herbe à réguler à l'emplacement du champ où se trouve l'outil (5), les actionneurs (1) individuels étant montés de manière à pouvoir tourner autour d'au moins un axe transversalement à la direction de déplacement et de levage ou étant montés de manière à pouvoir coulisser au moins dans la direction de déplacement et étant précontraints dans leur position de départ (35) contre respectivement au moins un accumulateur de force (9), si bien que l'outil (5) peut effectuer un mouvement d'évitement à l'opposé de la direction de déplacement (7) en cas de rencontre avec au moins un obstacle fixe (37) dans la position de travail (31), une force de rappel se formant dans ce cas dans l'accumulateur de force (9) et, l'unité d'actionnement d'outil retournant dans sa position de départ dans la direction de déplacement par réduction de la force de rappel dans l'accumulateur de force (9) après avoir passé l'obstacle fixe (37) ou après que l'outil (5) a été ramené dans la position de repos (30) par l'actionneur (1), **caractérisé en ce que** les actionneurs sont pilotés de telle manière que le temps pendant lequel les outils individuels (5) peuvent se trouver dans la position de travail (31) lors de la rencontre avec un obstacle fixe (37) est limité, si bien que le véhicule porteur (60) parcourt pendant ce temps au maximum un trajet (43) tel que l'outil (5) est toujours ramené dans sa position de repos (30) avant qu'une force de rappel maximale admissible (40) ne soit atteinte dans l'accumulateur de force (5).

2. Dispositif selon la revendication 1, **caractérisé en ce que** le pilotage des actionneurs est défini de telle sorte que les outils (5) sont autorisés systématiquement à parcourir seulement un trajet maximal défini du véhicule porteur (60) dans la position de travail (31), ledit trajet maximal étant défini de telle sorte qu'également en cas de rencontre avec un obstacle fixe (37) immédiatement après avoir atteint la position de travail (31), la force de rappel maximale admissible (40) n'est pas dépassée avant le retour dans la position de repos (30).

3. Dispositif selon l'une des revendications 1 ou 2, **caractérisé en ce que** les unités d'actionneurs d'outil individuelles sont équipées d'un système de détection supplémentaire, qui détecte un mouvement d'évitement de l'outil (5) à l'opposé de la direction de déplacement et, lorsqu'un degré déterminé d'un mouvement d'évitement est détecté, l'actionneur (1) est piloté directement pour amener l'outil (5) dans sa position de repos (30) avant que la force de rappel maximale admissible (40) ne soit atteinte.

4. Dispositif selon l'une des revendications précédentes, **caractérisé en ce que** l'au moins un accumulateur de force (9) pour le mouvement d'évitement des unités d'actionneurs d'outil individuelles est au moins un ressort mécanique.

5. Dispositif selon l'une des revendications 1 à 3, **caractérisé en ce que** l'au moins un accumulateur de force (9) pour le mouvement d'évitement des unités d'actionneurs d'outil individuelles est au moins un vérin pneumatique ou hydraulique avec au moins une unité d'accumulateur de pression accouplée.

6. Dispositif selon l'une des revendications 1 à 3, **caractérisé en ce que** l'au moins un accumulateur de force (9) pour le mouvement d'évitement des unités d'actionneurs d'outil individuelles est au moins un actionneur électromécanique.

7. Dispositif selon l'une des revendications précédentes, **caractérisé en ce que** les actionneurs (1) pilotés individuellement sont des poinçons à entraînement mécanique ou électromécanique.

8. Dispositif selon l'une des revendications 1 à 6, **caractérisé en ce que** les actionneurs (1) pilotés individuellement sont des vérins hydrauliques ou pneumatiques.

9. Dispositif selon la revendication 8, **caractérisé en ce que** les actionneurs (1) pilotés individuellement sont des vérins hydrauliques ou pneumatiques, dans lesquels la tige de piston (2) comporte un prolongement supplémentaire (3) et un guidage supplémentaire le long de l'axe de translation (4), qui est relié à l'actionneur (1) individuel et réalise également le mouvement d'évitement.

10. Dispositif selon la revendication 9, **caractérisé en ce que** le guidage supplémentaire le long de l'axe de translation (4) comporte par ailleurs un système de blocage anti-rotation pour la tige de piston (2) y compris le prolongement (3) de tige de piston.

11. Dispositif selon la revendication 9, **caractérisé en ce que** la tige de piston (2) est reliée par ailleurs à une butée (21) qui, dans au moins une position finale de l'actionneur (1), se serre contre au moins un autre accumulateur de force pour absorber l'énergie de freinage (20) et libère l'énergie de freinage en tant qu'énergie d'accélération supplémentaire lors de l'inversion de la direction de déplacement.

12. Dispositif selon l'une des revendications précédentes, **caractérisé en ce que** le véhicule porteur est un robot de champ autonome.

13. Dispositif selon l'une des revendications précédentes, **caractérisé en ce que** le véhicule porteur est une combinaison d'un tracteur et d'un accessoire (60).

14. Dispositif selon l'une des revendications précédentes, **caractérisé en ce que** le véhicule porteur est un véhicule agricole automoteur.

15. Dispositif selon l'une des revendications précédentes, **caractérisé en ce que** plusieurs unités de régulation de mauvaises herbes (61) sont montées sur le véhicule porteur (60), comprenant chacune au moins une unité de détection (51) pour détecter des mauvaises herbes et au moins un ensemble de plusieurs unités d'actionneurs d'outil (52) pilotées individuellement.

16. Procédé de régulation de mauvaises herbes en utilisant un dispositif de régulation mécanique sélective de mauvaises herbes selon l'une des revendications précédentes.

17. Procédé de régulation de mauvaises herbes selon la revendication 16, **caractérisé en ce que** les unités de régulation de mauvaises herbes (61) sont montées sur le champ (62) chacune transversalement à la direction de déplacement du véhicule porteur (7) aux mêmes distances que les distances entre les rangées de plantes, et respectivement une unité de régulation de mauvaises herbes (61) se trouve en fonctionnement au-dessus respectivement d'une rangée de plantes.

18. Programme informatique qui est mis au point pour piloter un dispositif selon l'une des revendications 1 à 15.

19. Support de stockage lisible par machine, sur lequel est stocké un programme informatique selon la revendication 18.
